# EUROPÄISCHE PATENTSCHRIFT

(11) **EP 1 946 346 B1**
(45) Veröffentlichungstag und Bekanntmachung des Hinweises auf die Patenterteilung: **29.09.2010**
(21) Anmeldenummer: 06794003.1
(22) Anmeldetag: 10.10.2006
(51) Int. Cl.: H01H 9/18

(54) **BEDIENELEMENT DER GEBÄUDETECHNIK**
BUILDING TECHNOLOGY CONTROL ELEMENT
ELEMENT DE COMMANDE POUR L'EQUIPEMENT TECHNIQUE DE BATIMENTS

(30) Priorität: 08.11.2005 DE 102005053268
(43) Veröffentlichungstag der Anmeldung: 23.07.2008
(73) Patentinhaber: SIEMENS AKTIENGESELLSCHAFT, 80333 München (DE)
(72) Erfinder: DIETZ, Martin, 93105 Tegernheim (DE); ERNST, Michael, 93197 Zeitlarn (DE)
(86) Internationale Anmeldenummer: PCT/EP2006/067239
(87) Internationale Veröffentlichungsnummer: WO 2007/054413

(56) Entgegenhaltungen:
- DE-A1- 4 423 839
- DE-A1- 10 103 335
- DE-A1- 19 912 427
- US-A- 4 126 854

## Beschreibung

Die Erfindung betrifft ein Bedienelement der Gebäudetechnik Verwendung findet ein Bedienelement der Gebäudetechnik beispielsweise als Installationsschalter oder Installationstaster bei Elektroinstallationen in Gebäuden aller Art. Zur Zuordnung der Funktion des jeweiligen Bedienelements werden diese mit Beschriftungen versehen, die u.a. aufgeklebt oder auch aufgedruckt sein können. Ein derartiges Bedien element der Gebäudetechnik ist in der DE 199 12 427 A1 offenbart.

Bekannt ist aus der DE 101 03 335 A1 ein Bedienelement für ein elektronisches Gerät, wie beispielsweise Mobiltelefon oder Taschenrechner, das an mindestens einer Seite eine Anzeige aufweist, die unterschiedliche Funktionen des Gerätes kennzeichnet. Die Anzeige basiert dabei auf dem Prinzip der elektronischen Tinte bzw. des elektronischen Papiers.

In der EP 0 889 425 A1 ist ein elektronisches Preisanzeigesystem offenbart, bei dem Preisanzeigen mittels eines zentralen Rechners über einen Datenbus gesteuert werden.

Der Erfindung liegt die Aufgabe zugrunde, ein Bedienelement der Gebäudetechnik zu schaffen, das eine komfortabel veränderbare Beschriftung mit einem geringen Platzbedarf aufweist.

Die Aufgabe wird erfindungsgemäß durch die Merkmale des Patentanspruchs 1 gelöst; vorteilhafte Ausgestaltungen sind jeweils Gegenstand von weiteren Ansprüchen.

Durch die über eine Schnittstelle ansteuerbare Anzeige des. Bedienelements, bei der zwischen zwei transparenten Elektroden ein Fluid vorgesehen ist, in dem bewegliche Anzeigemittel angeordnet sind, welche in Abhängigkeit einer an die Elektroden angelegten Spannung ihre Lage im Fluid derart verändern, dass an einer der beiden transparenten Elektroden ein sichtbarer Kontrast im Sinne eines Teils eines Schriftzeichens gegeben ist, kann die Anzeige auf einfache Weise mittels unterschiedlicher Datenübertragungseinheiten individuell eingestellt oder je nach Bedarf flexibel verändert werden, wobei die Art des Anzeigeelements eine platz- und stromsparende Bauform ermöglicht. In der Installationstechnik ist es demnach möglich, vor allem in Zweckbauten, Bedienelemente, wie Schalter oder Taster, mit einfach veränderbaren Beschriftungsfeldern zu versehen, die über deren Verwendungszweck Aufschluss geben. Somit wird dem Kundenwunsch, Büros hinsichtlich der Elektroinstallation flexibel zu nutzen und diese auf einfache Weise an die Bedürfnisse der Nutzer anpassen zu können, Genüge getan.

Mit Vorteil ist das Bedienelement als Installationstaster oder Installationsschalter ausgeführt, so dass auf in der E-lektroinstallationstechnik standardisierte Bauformen zurückgegriffen werden kann.

In einer vorteilhaften Ausgestaltung ist das Anzeigeelement in dem Betätigungsmittel, insbesondere Taster- oder Schalterwippe, lösbar eingelegt, wodurch eine besonders platzsparende Baueinheit mit einer Wechseloption des Anzeigeelements im Falle eines Defekts gegeben ist.

Vorteilhafterweise ist das Anzeigeelement in dem Betätigungsmittel, insbesondere Taster- oder Schalterwippe, fest in Kunststoffmasse eingespritzt, so dass mit wenigen Fertigungsschritten eine funktionsfähige Baueinheit herstellbar ist. Mit Vorteil ist die Schnittstelle für ein Gebäudeleitsystem, insbesondere EIB oder LON, mit einem darin integrierbaren Programmiergerät ausgebildet; hierbei kann bei der Programmierung des Bedienelements über das Bussystem gleichzeitig auch die elektronische Beschriftung des Anzeigeelements eingestellt werden.

Vorteilhafterweise ist die Schnittstelle für ein eigenständiges leitungsbehaftetes Programmiergerät ausgebildet, so dass auch proprietäre Systeme konventioneller Art zum Einsatz kommen können.

In einer weiteren Ausführungsform ist die Schnittstelle für ein eigenständiges kabelloses Programmiergerät, insbesondere mit Funk- oder Infrarotfunktion, ausgebildet; hierbei kann zum einen über eine Schreib-Leseeinheit des Programmiergerätes ein in dem Bedienelement befindlicher Transponder neben Datensignalen auch mit der zur Programmierung notwendigen Spannung berührungslos versorgt werden und zum anderen ist eine platzsparende Infrarotkommunikationseinheit vorsehbar.

Die Erfindung sowie vorteilhafte Ausgestaltungen gemäß den Merkmalen der weiteren Ansprüche werden im Folgenden anhand in der Zeichnung schematisch dargestellter Ausführungsbeispiele näher erläutert, ohne dass insoweit eine Beschränkung der Erfindung erfolgt; darin zeigen:
- FIG 1: ein anspruchsgemäßes Bedienelement gekoppelt an ein Bussystem;
- FIG 2: ein anspruchsgemäßes Bedienelement gekoppelt an ein kabelbehaftetes Programmiergerät;
- FIG 3: ein anspruchsgemäßes Bedienelement gekoppelt an ein kabelloses Programmiergerät; und
- FIG 4: eine erste Ausführung des Anzeigeelements des an- spruchsgemäßen Bedienelements;
- FIG 5: eine weitere Ausführung des Anzeigeelements des an- spruchsgemäßen Bedienelements.

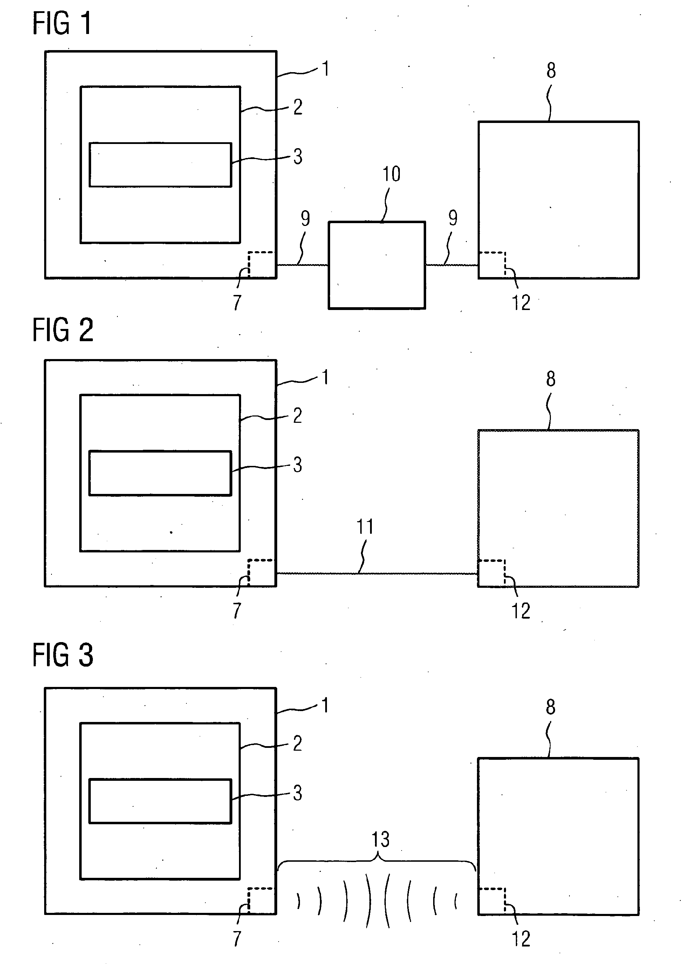

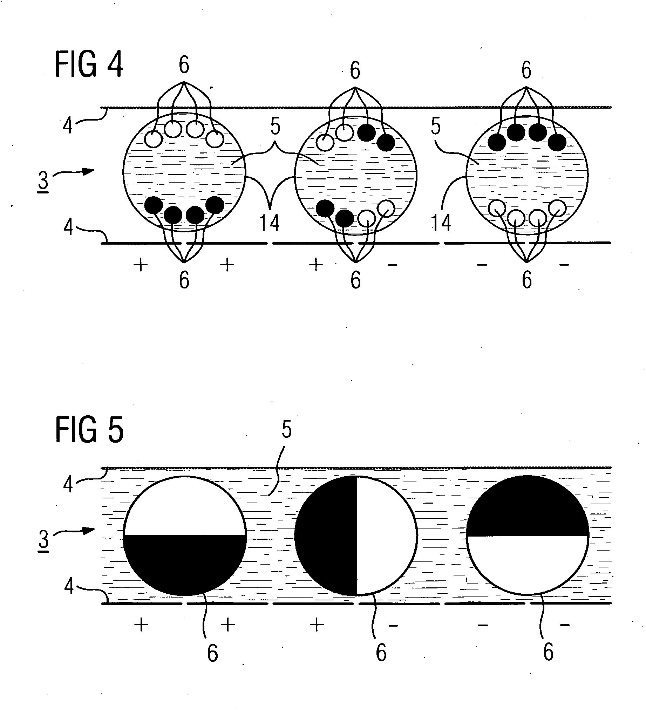

In den FIG 1 bis 3 ist jeweils ein Bedienelement 1 der Gebäudetechnik gezeigt, das mit einem Betätigungsmittel 2 versehen ist. Das als Schalter oder auch Taster ausgeführte Betätigungsmittel 2 weist ein Anzeigeelement 3 auf, welches in das Material des Betätigungsmittels 2 dauerhaft eingespritzt oder eingeklipst oder wieder entnehmbar eingelegt oder eingeschoben oder auf vergleichbare Weise damit verbunden sein kann. Das Anzeigeelement 3 gemäß der FIG 4 und 5 weist hierbei einen konstruktiven Aufbau auf, bei dem zwischen zumindest zwei transparenten Elektroden 4 ein Fluid 5 vorgesehen ist, in dem bewegliche Anzeigemittel 6 angeordnet sind, welche in Abhängigkeit einer an die Elektroden 4 angelegten Spannung ihre Lage im Fluid 5 derart verändern, dass zumindest an einer der beiden transparenten Elektroden 4 ein sichtbarer Kontrast im Sinne zumindest eines Teils eines Schriftzeichens gegeben ist.

Das Bedienelement 1 ist zudem mit einer Schnittstelle 7 zur Daten- und ggf. Energieübertragung ausgerüstet, wodurch über einen Fernzugriff Einstellungen vorgenommen werden können, um die Bedürfnisse des Benutzers des Bedienelements 1 zu berücksichtigen. Sofern die Ankopplungs-Schnittstelle 7 auch zur Übernahme von Energie dient, kann diese zum Betreiben sowohl des Gebäudetechnik-Bedienelements als auch zum Betreiben des zugehörigen Anzeigefelds genutzt werden.

Gemäß der Ausführung nach FIG 1 dient zur Datenübertragung ein externes Ein-/Ausgabegerät 8, das als Programmiergerät ausgeführt ist. Das Programmiergerät 8, beispielsweise in Form eines Personal Computers oder Notebooks, ist über einen Bus 9 bzw. dessen Leitungen an einen Busankoppler 10 angeschlossen. Der Busankoppler 10 wiederum ist über eine weitere Busleitung 9 an der Schnittstelle 7 angekoppelt.

Die Anzeige des Anzeigeelements 3 ist durch von dem Programmiergerät 8 generierte und über die Schnittstelle 7 übertragene Daten steuerbar, so dass beispielsweise bei der Programmierung des Bedienelements 1 über einen Bus nach dem EIB- oder LON-Standard gleichzeitig auch die Beschriftung des Schalters oder Tasters vorgenommen werden kann. In Folge dessen ist dann beispielsweise der Schriftzug "Jalousie Küche" oder "Licht Badezimmer" oder dergleichen im Anzeigefeld des Anzeigeelements 3 für den Bediener zu sehen. Durch diese Vorgehensweise erhält jedes Bedienelement zu seiner zugewiesenen Funktion auch die zugehörige Beschriftung, so dass Verwechslungen bei der Funktionszuordnung ausgeschlossen sind; somit zeigt die Anzeige des Anzeigeelements 3 die Funktion des Bedienelements 1 eindeutig an. Auch die Einbeziehung des Bedienelements 1 in ein komplexeres Gebäudemanagementsystem ist möglich, wonach neben Jalousien und Licht auch das Klima geregelt oder Notfallsituationen, wie beispielsweise Rauch und Feuer, erfasst und gemeldet werden können.

In weiteren Ausgestaltungen gemäß FIG 2 und 3 dienen als Daten-Übertragungsmedien zum einen ein Datenkabel 11 eines proprietären Programmiergerätes 8, das an die Schnittstelle 7 des Bedienelements 1, die beispielsweise als USB-Schnittstelle ausgeführt ist, angeschlossen ist bzw. zum anderen eine Funk- oder auch Infrarot-Verbindung 13 zwischen den Schnittstellen 7,12 des Programmiergerätes 8 und des Bedienelements 1.

Gemäß FIG 4 ist der schematische Aufbau einer Ausführungsform des Anzeigeelements 3 gezeigt. Hierbei sind die beiden bereits erwähnten hauchdünnen, biegsamen und transparenten Elektroden 4 vorgesehen, zwischen denen sich die mit der Flüssigkeit 5 gefüllten, kugelförmigen Behältnisse 14 befinden. In der Flüssigkeit 5 sind beispielsweise schwarze und weiße Anzeigemittel 6 in Form von Farb-Pigmenten frei beweglich untergebracht. Die schwarzen Pigmente weisen dabei eine negative und die weißen Pigmente eine positive Ladung auf. Sobald an den Elektroden 4 eine Spannung angelegt wird, wandern die Pigmente entsprechend ihrer Ladung innerhalb der transparenten Behältnisse 14 in Richtung der einen oder der anderen Elektrode, um schließlich in Summe mit Pigmenten benachbarter Behältnisse einen Schriftzug oder auch ein Gesamtbild entsprechend FIG 4 zu schaffen.

Vorteilhafterweise verharren die Pigmente in der jeweiligen Stellung auch dann, wenn keine Spannung mehr anliegt. Bedingt durch die die Anzeige speichernden Eigenschaften des Anzeigeelements 3 ist eine dauerhafte Beschriftung von Bedienoberflächen ohne Spannungsversorgung möglich. Damit ist neben einer Anbindung eines derartigen Anzeigeelements direkt über ein Bussystem auch eine Programmierung über eine Koppelung mittels Schreib-Lesegerät und zugehörigem Transponder möglich, wobei die zur Programmierung des Transponders notwendige Spannung berührungslos über das Programmiergerät übertragen wird.

Gemäß FIG 5 ist der schematische Aufbau einer weiteren Ausführungsform des Anzeigeelements 3 dargestellt. In diesem Fall sind ebenfalls zwei hauchdünne, biegsame und transparente Elektroden 4 vorgesehen, zwischen denen sich eine Flüssigkeit 5 befinden. In der Flüssigkeit 5 sind kugelförmige Anzeigemittel 6 mit einer schwarzen und einer weißen Kugelhälfte frei drehbar gelagert. Die schwarzen Kugelhälften weisen dabei eine negative und die weißen Kugelhälften eine positive Ladung auf. Sobald an den Elektroden 4 eine Spannung angelegt wird, drehen sich die Kugeln 6 entsprechend ihrer Ladung innerhalb der Flüssigkeit 5 in Richtung der einen oder der anderen Elektrode, um schließlich in Summe mit benachbarten Kugeln ebenfalls einen Schriftzug oder auch ein Gesamtbild entsprechend FIG 5 zu erzeugen. Beide Ausführungen gemäß der FIG 4 und 5 ermöglichen durch ihren flachen Aufbau eine Integration des Anzeigeelements in ein Installations-Bedienelement mit an sich beschränkten Integrationsmöglichkeiten für zusätzliche Funktionsmittel.

Die zuvor erläuterte Erfindung kann wie folgt zusammengefasst werden:

Um ein Gebäudetechnik-Bedienelement 1 mit einem Betätigungsmittel 2 zu schaffen, das eine komfortabel veränderbare Beschriftung mit einem geringen Platzbedarf aufweist, ist vorgesehen, eine Schnittstelle 7 zumindest zur Übertragung von Daten eines an die Schnittstelle 7 ankoppelbaren externen Ein-/Ausgabegerätes 8 und zumindest ein Anzeigeelement 3 einzusetzen, dessen Anzeige durch über die Schnittstelle 12 übertragene Daten steuerbar ist, wobei zwischen zumindest zwei transparenten Elektroden 4 ein Fluid 5 vorgesehen ist, in dem bewegliche Anzeigemittel 3 angeordnet sind, welche in Abhängigkeit einer an die Elektroden 4 angelegten Spannung ihre Lage im Fluid 5 derart verändern, dass zumindest an einer der beiden transparenten Elektroden 4 ein sichtbarer Kontrast im Sinne wenigstens eines Teils eines Schriftzeichens oder wenigstens eines Teils einer Darstellung gegeben ist.

## Patentansprüche

1. Bedienelement (1) der Gebäudetechnik, das mit einem Betätigungsmittel (2) und einer Schnittstelle (7) zumindest zur Übertragung von Daten eines an die Schnittstelle (7) ankoppelbaren externen Ein-/Ausgabegerätes (8) versehen ist und zumindest ein Anzeigeelement (3) aufweist, dessen Anzeige durch über die Schnittstelle (7) übertragene Daten steuerbar ist, wobei zwischen zumindest zwei transparenten Elektroden (4) ein Fluid (5) vorgesehen ist, in dem bewegliche Anzeigemittel (3) angeordnet sind, deren Lage im Fluid (5) in Abhängigkeit einer an die Elektroden (4) angelegten Spannung änderbar ist, so dass zumindest an einer der beiden transparenten Elektroden (4) ein sichtbarer Kontrast im Sinne wenigstens eines Teils einer Darstellung gegeben ist, wobei die beweglichen Anzeigemittel (3) dazu vorgesehen sind ohne angelegte Spannung in deren Lage zu verbleiben, **dadurch gekennzeichnet, dass** die Schnittstelle (7) für ein eigenständiges kabelloses Programmiergerät (8), insbesondere mit Funk- oder Infrarotfunktion, ausgebildet und derart zur Energieübertragung ausgestaltet ist, dass das Anzeigeelement mit der zur Programmierung notwendigen Spannung berührungslos versorgt werden kann.

2. Bedienelement (1) nach Anspruch 1, ausgeführt als Installationstaster oder Installationsschalter.

3. Bedienelement (1) nach Anspruch 1 oder 2, wobei das Anzeigeelement (3) in dem Betätigungsmittel (2), insbesondere Taster- oder Schalterwippe, lösbar eingelegt ist.

4. Bedienelement (1) nach Anspruch 1 oder 2, wobei das Anzeigeelement (3) in dem Betätigungsmittel (2), insbesondere Taster- oder Schalterwippe, fest in Kunststoffmasse eingespritzt ist.

5. Bedienelement (1) nach Anspruch 1, wobei die Schnittstelle (12) für ein Gebäudeleitsystem, insbesondere EIB oder LON, mit einem darin integrierbaren Programmiergerät (8) ausgebildet ist.

6. Bedienelement (1) nach Anspruch 1, wobei die Schnittstelle (7) für ein eigenständiges leitungsbehaftetes Programmiergerät (8) ausgebildet ist.

7. Bussystem mit einem Bedienelement (1) nach einem der vorhergehenden Ansprüche, das mittels eines Busankopplers (10) mit einem Programmiergerät (8) verbunden ist.

8. Gebäudemanagementsystem mit zumindest einem Bussystem nach Anspruch 7.

## Claims

1. Building technology control element (1) which is provided with an actuating means (2) and an interface (7) at least for the transmission of data from an external input/output device (8), which can be coupled to the interface (7) and which has at least one display element (3), the display thereon being able to be controlled by data transmitted via the interface (7), where between at least two transparent electrodes (4) there is a fluid (5) in which are arranged mobile display means (3), whose position in the fluid (5) can be changed as a function of a voltage applied to the electrodes (4), so that on at least one of the two transparent electrodes (4) a visible contrast is produced in the nature of at least part of an image, where provision is made that the mobile display means (3) remain in their position when there is no applied voltage, **characterised in that** the interface (7) is designed for a stand-alone wireless programmer (8), in particular with radio or infrared functionality, and for the transfer of power in such a way that the display element can be supplied in a noncontact manner with the voltage necessary for its programming.

2. Control element (1) according to claim 1 embodied as an installation pushbutton or installation switch.

3. Control element (1) according to claim 1 or 2, where the display element (3) is inlaid removably in the actuating means (2), in particular a pushbutton or switch rocker.

4. Control element (1) according to claim 1 or 2, where the display element (3) is permanently injected into a plastic mass in the actuating means (2), in particular a pushbutton or switch rocker.

5. Control element (1) according to claim 1, where the interface (7) is designed for a building management system, in particular EIB or LON, with a programmer (8) which can be integrated therein.

6. Control element (1) according to claim 1, where the interface (7) is designed for a stand-alone wire-connected programmer (8).

7. Bus system with a control element (1) according to one of the preceding claims, which is linked to a programmer (8) by means of a bus coupler (10).

8. Building management system with at least one bus system according to claim 7.

## Revendications

1. Elément de commande (1) de la technique du bâtiment qui est pourvu d'un moyen d'actionnement (2) et d'une interface (7) au moins pour la transmission de données d'un dispositif d'entrée/sortie extérieur (8) pouvant être couplé à l'interface (7) et qui comprend au moins un élément d'affichage (3) dont l'affichage peut être commandé par des données transmises par le biais de l'interface (7), un fluide (5) dans lequel sont placés des moyens d'affichage mobiles (3) étant prévu entre au moins deux électrodes transparentes (4), moyens dont la position dans le fluide (5) peut être modifiée en fonction d'une tension appliquée aux électrodes (4) de manière à ce qu'un contraste visible en accord avec au moins une partie d'une représentation soit obtenu au moins au niveau de l'une des deux électrodes transparentes (4), les moyens d'affichage mobiles (3) étant prévus pour demeurer dans leur position sans tension appliquée, **caractérisé en ce que** l'interface (7) est exécutée pour un appareil de programmation (8) autonome sans câble, notamment à fonction radio ou infrarouge, et est réalisée pour la transmission d'énergie de façon que l'élément d'affichage puisse être alimenté sans contact par la tension nécessaire à la programmation.

2. Elément de commande (1) selon la revendication 1, exécuté en tant que bouton-poussoir d'installation ou interrupteur d'installation.

3. Elément de commande (1) selon la revendication 1 ou 2, l'élément d'affichage (3) étant inséré de manière amovible dans le moyen d'actionnement (2), notamment bouton-poussoir ou commutateur à bascule.

4. Elément de commande (1) selon la revendication 1 ou 2, l'élément d'affichage (3) étant injecté de manière fixe dans la masse plastique dans le moyen d'actionnement (2), notamment bouton-poussoir ou commutateur à bascule.

5. Elément de commande (1) selon la revendication 1, l'interface (12) étant exécutée pour un système de gestion centralisée, notamment EIB ou LON, avec un appareil de programmation (8) pouvant être intégré au système.

6. Elément de commande (1) selon la revendication 1, l'interface (7) étant exécutée pour un appareil de programmation (8) autonome avec câble.

7. Système de bus avec un élément de commande (1) selon l'une des revendications précédentes qui est relié à un appareil de programmation (8) au moyen d'un coupleur de bus (10).

8. Système de gestion de bâtiment comprenant au moins un système de bus selon la revendication 7.
